# EUROPÄISCHE PATENTSCHRIFT

(11) **EP 2 689 841 B1**
(45) Veröffentlichungstag und Bekanntmachung des Hinweises auf die Patenterteilung: **07.09.2016**
(21) Anmeldenummer: 13176242.9
(22) Anmeldetag: 12.07.2013
(51) Int. Cl.: B01J 23/42, B01J 23/46, B01J 35/06, C01B 21/26, C01B 21/38

(54) **KATALYSATOR**
CATALYST
CATALYSEUR

(30) Priorität: 24.07.2012 DE 102012106732
(43) Veröffentlichungstag der Anmeldung: 29.01.2014
(73) Patentinhaber: Heraeus Deutschland GmbH & Co. KG, 63450 Hanau (DE)
(72) Erfinder: Keller, Thorsten, Dr., 64293 Darmstadt (DE); Jantsch, Uwe, Dr., 63579 Freigericht (DE); Lambert, Claude Georges Jacques Paul, 95470 Saint-Witz (FR)
(74) Vertreter: Heraeus IP

(56) Entgegenhaltungen:
- WO-A1-2004/047983
- DE-T2- 60 201 502
- GB-A- 337 680

## Beschreibung

Die vorliegende Erfindung betrifft einen Katalysator, aufweisend mehrere hintereinander angeordnete Katalysator-Netze aus einem ersten edelmetallhaltigen Draht, in die jeweils ein zweiter edelmetallhaltiger Draht eingelassen ist, der dem jeweiligen Katalysator-Netz eine Vorzugsrichtung verleiht.

Katalysatoren im Sinne der Erfindung sind Edelmetall-Katalysatoren, die insbesondere für Gasreaktionen verwendet werden. Sie werden beispielsweise bei der Herstellung von Blausäure nach dem Andrussow-Verfahren oder bei der Herstellung von Salpetersäure nach dem Ostwald-Verfahren eingesetzt. Um für diese Reaktionen eine große katalytisch-aktive Oberfläche bereitzustellen, weisen die Katalysatoren in der Regel eine räumliche, gasdurchlässige Struktur auf.

### Stand der Technik

Häufig bestehen die Edelmetallkatalysatoren aus Katalysator-Netzen, die beispielsweise in Form von Gestricken, Gewirken oder Geweben aus Edelmetalldraht ausgebildet sind. Daher spielt neben den Biege- und Zugfestigkeiten und der Duktilität der Edelmetalldrähte auch der Drahtdurchmesser eine die geometrische Form des Katalysator-Netzes begrenzende Rolle. So sind zum Beispiel zum Verstricken von Drähten aus bestimmten Platin-Rhodium-, Platin-Palladium-Rhodium-, Palladium-Nickel-, Palladium-Kupfer- und Palladium-Nickel-Kupfer-Legierungen nur Edelmetalldrähte mit Durchmessern zwischen 50 bis 120 µm und Zugfestigkeiten zwischen 900 und 1050 N/mm² geeignet.

Allerdings sind durch diese Eigenschaften der Edelmetalldrähte auch andere konstruktive Katalysator-Eigenschaften, wie beispielsweise die Katalysatormasse je Oberflächeneinheit oder die Anzahl der Maschen pro Oberflächeneinheit in gewissen Grenzen festgelegt. Eine Optimierung des zu katalysierenden Reaktionsprozesses anhand dieser konstruktiven Katalysator-Eigenschaften ist daher nur eingeschränkt möglich.

Um bei bekannten Katalysator-Netzen auch diese konstruktiven Katalysator-Eigenschaften besser einstellen zu können, wird in der US 5,669,680 A vorgeschlagen, bei der Herstellung der Katalysator-Netze in die Maschen mehrere Edelmetall-Drähte mit einer helixartigen, wendelförmigen Struktur einzuarbeiten, was dem planaren, zweidimensionalen Netz eine Erstreckung in die dritte Raumdimension verleiht. Derartige Netze werden daher auch als "dreidimensionale Netze" bezeichnet. Durch die helixartige Struktur kann beispielsweise über die Drahtdicke des eingearbeiteten Drahtes oder über die Anzahl der Windungen der helixartigen Struktur sowohl die aktive Katalysatoroberfläche als auch die Masse des Katalysators je Oberflächeneinheit beeinflusst werden. Die eingearbeiteten Drähte ermöglichen auch die Herstellung von schweren dreidimensionalen Netzsystemen. Die eingearbeiteten Edelmetalldrähte verlaufen in der Regel in einer Richtung linear und parallel zueinander und verleihen so dem Katalysator-Netz auch eine durch ihren Verlauf festgelegte Vorzugsrichtung.

Um eine gleichmäßige Belastung von Netz-basierten Katalysatoranordnungen zu gewährleisten wird in der GB 337,680 vorgeschlagen die Netze so anzuordnen, dass die Drähte eines Netzes nicht parallel, sondern versetzt zu den jeweiligen Drähten des benachbarten Netzes ausgerichtet werden. Zum Beispiel können die Netze in einem Winkel von 45° gegeneinander verdreht sein, wenn zwei Netze übereinander angeordnet werden, so dass die Drähte des einen Netzes diagonal zu den Drähten des jeweils anderen Netzes ausgerichtet sind. Denkbar ist auch, dass bei einer Anordnung von drei Netzen übereinander jedes der Netze um jeweils relativ 30 ° zum jeweils benachbarten Netz verdreht ist. Das erste Netz wäre dann relativ um 60 ° gegenüber dem dritten Netz verdreht.

Zur Optimierung der Effizienz einer auf Platinnetzen basierenden Katalysatoranordnung wird in der WO 2004/047983 vorgeschlagen, die Anordnung der einzelnen Katalysator-netze so zu wählen, dass die Kettfäden eines Netzes senkrecht zur Richtung der Kettfäden des jeweils benachbarten Netzes ausgerichtet sind.

Die Katalysator-Netze werden üblicherweise in die Reaktionszone eines Strömungsreaktors eingebaut, wobei häufig mehrere Katalysator-Netze hintereinander angeordnet sind. So ist beispielsweise aus der DE 602 01 502 T2 ein Strömungsreaktor zur katalytischen Oxidation von Ammoniak bekannt, bei dem der Katalysator als Packung mehrerer, parallel zueinander verlaufender Katalysator-Netze ausgebildet ist. Die Packung ist derart in der Reaktionszone angeordnet, dass die von den Katalysator-Netzen aufgespannten Ebenen senkrecht zur Strömungsrichtung eines die umzusetzenden Edukte enthaltenden Fluids verläuft.

Die quer zur Strömungsrichtung verlaufende Anordnung der Katalysatorpackung erzeugt einen Strömungswiderstand, der unter anderem von der Porosität der Katalysatorpackung abhängt. Mit zunehmender Einsatzdauer wird allerdings häufig eine Abnahme der Porosität und eine Zunahme des Strömungswiderstandes beobachtet, wodurch eine gleichmäßige, zeitlich häufig eine Abnahme der Porosität und eine Zunahme des Strömungswiderstandes beobachtet, wodurch eine gleichmäßige, zeitlich konstante Strömung verhindert und eine reproduzierbare, durchschnittliche Produktausbeute beeinträchtigt wird.

### Technische Aufgabenstellung

Der Erfindung liegt die Aufgabe zugrunde, einen Katalysator anzugeben, der eine hohe und zeitlich stabile Produktausbeute gewährleistet und der dabei eine hohe Lebensdauer aufweist.

### Allgemeine Darstellung der Erfindung

Diese Aufgabe wird ausgehend von einem Katalysator der eingangs genannten Gattung erfindungsgemäß dadurch gelöst, dass die Katalysator-Netze derart hintereinander angeordnet sind, dass die Vorzugsrichtungen benachbarter Katalysator-Netze einen Winkel zwischen 0° und 180° einschließen.

Der Katalysator im Sinne der Erfindung weist mehrere, hintereinander angeordnete Katalysator-Netze aus erstem edelmetallhaltigen Draht auf, in die jeweils ein zweiter edelmetallhaltiger Draht eingelassen ist. Unter einem edelmetallhaltigen Draht wird ein Draht verstanden, der aus Edelmetall besteht oder einen nennenswerten Anteil (> 50 Gew.-%) an Edelmetall enthält. Derartige Drähte werden der Einfachheit halber im Folgenden auch kurz als "Edelmetalldraht" bezeichnet. Das Einlassen des zweiten Edelmetalldrahtes erfolgt unter Ausbildung einer Fügeverbindung, vorzugsweise durch Vernähen des zweiten Edelmetalldrahts mit dem Katalysator-Netz. Hierdurch erhält das jeweilige Katalysator-Netz eine dreidimensionale Struktur. Der eingelassene zweite Draht verleiht dem jeweiligen Katalysator-Netz eine Vorzugsrichtung, die sich in beiden Richtungen entlang der Längsachse des eingelassenen zweiten Drahtes erstreckt. Die Anordnung mehrerer Katalysator-Netze hintereinander wird auch als "Katalysator-Packung" bezeichnet.

Im Gegensatz zu bekannten Katalysatoren ist bei dem erfindungsgemäßen Katalysator vorgesehen, dass die die Vorzugsrichtungen einen Winkel ungleich Null einschließen, was im Folgenden auch als "winkelversetzte Anordnung" bezeichnet wird.

Durch die versetzte Anordnung der Katalysator-Netze wird eine hohe mechanische Stabilität der Katalysatorpackung erreicht. Diese ist bedeutsam, wenn die Katalysator-Netze quer zur Strömungsrichtung eines den Katalysator durchströmenden Fluids angeordnet sind. Durch die Anordnung der Katalysator-Netze quer zur Strömungsrichtung wirken die Katalysator-Netze als Strömungswiderstand. Hieraus entsteht - in Strömungsrichtung gesehen - vor dem Katalysator ein Druck, der zu einer Kompression der Katalysator-Netze beziehungsweise der Katalysatorpackung führt, so dass das Lückenvolumen innerhalb der Katalysatorpackung verringert wird. Hierdurch wird die Strömung des Fluids allmählich verändert und die durchschnittliche Produktausbeute und die Lebensdauer des Katalysators beeinträchtigt.

Dadurch, dass die Vorzugsrichtungen benachbarter Katalysator-Netze miteinander einen Winkel ungleich Null einschließen, wird einer Kompression der Katalysator-Netze entgegengewirkt.

Denn eine Ursache für die unter Druckbelastung beobachtete größere Verdichtung der üblichen Katalysator-Netze mit Vorzugsrichtungen ist deren dreidimensionale Struktur. Jedes der Katalysator-Netze hat quer zur Vorzugsrichtung gesehen, wechselweise Vertiefungen und Erhebungen. Bei einer parallelen Anordnung der Vorzugsrichtungen benachbarter Katalysator-Netze verlaufen diese Vertiefungen und Erhebungen in gleicher Richtung; so dass eine komplementäre Anordnung von Vertiefungen und Erhebungen benachbarter Katalysator-Netze begünstigt wird, wenn auf die Katalysator-Netze ein Druck einwirkt. Eine solche komplementäre Anordnung hat eine vergleichsweise große Verdichtung der Katalysator-Netze zur Folge, die durch eine stetige Druckbelastung begünstigt wird.

Im Gegensatz zu einer parallelen Ausrichtung der Vorzugsrichtungen ist bei einer winkelversetzten Anordnung die Ausbildung einer solchen komplementären Struktur von Vertiefungen und Erhebungen benachbarter Katalysator-Netze erschwert. Die so erhaltene, erhöhte mechanische Stabilität der Katalysator-Packung trägt zu einer verlängerten Lebensdauer des erfindungsgemäßen Katalysators bei.

Beim Katalysator im Sinne der Erfindung ist vorgesehen, dass der zweite Draht mindestens einen helixartig ausgebildeten Längenabschnitt aufweist.

Der zweite Draht kann einen oder mehrere helixartig ausgebildete Längenabschnitte umfassen oder über seine gesamte Länge als helixartig gebogener Draht ausgebildet sein. Dadurch, dass der zweite Draht mindestens einen helixartig ausgebildeten Längenabschnitt aufweist, ist beispielsweise über die Drahtdicke oder über die Anzahl der Windungen der helixartigen Längenabschnittes sowohl die aktive Katalysatoroberfläche als auch die Masse des Katalysators bezogen auf eine Oberflächeneinheit des Katalysator-Netzes einstellbar. In einer bevorzugten Ausführungsform weist der zweite Draht über seine gesamte Länge eine helixartige Struktur auf. Ein solcher Draht ist aufgrund seiner gleichmäßigen Struktur einfach herzustellen und zu verarbeiten. In einer anderen ebenso bevorzugten Ausführungsform wechseln sich helixartig ausgebildete und lineare Längenabschnitte des zweiten Drahtes ab, so dass durch eine geeignete Wahl der Länge des jeweiligen Längenabschnitts eine Einstellung der Katalysatoreigenschaften vorgenommen werden kann.

Im Vergleich zum linearen Längenabschnitt erzeugt der helixartige Längenabschnitt eine voluminösere Struktur. Bei einer parallelen Ausrichtung der Vorzugsrichtungen benachbarter Katalysator-Netze verlaufen auch die helixartigen Längenabschnitte benachbarter Katalysator-Netze in der gleichen Richtung, so dass sich diese ineinander schieben können, wobei ebenfalls eine Verdichtung der Katalysator-Netze auftritt. Sind die benachbarten Katalysator-Netze allerdings winkelversetzt, wird dieser Verdichtungseffekt reduziert.

In einer weiteren ebenso bevorzugten Ausführungsform des Katalysators ist der zweite Draht aus einem Platinmetall oder aus einer Legierung davon gefertigt.

Platinmetalle werden als Katalysatoren beispielsweise bei der Herstellung von Salpetersäure nach dem Ostwald-Verfahren oder bei der Synthese von Blausäure nach dem Andrussow-Verfahren eingesetzt. Sie weisen eine ausreichende Duktilität, sowie Biege- und Zugfestigkeiten auf, um zu Katalysator-Netzen in Form von Gestricken, Gewirken oder Geweben verarbeitet werden zu können.

Dadurch, dass der zweite Draht aus einem Platinmetall oder aus einer Legierung davon gefertigt ist, weist er eine katalytische Aktivität auf und ist darüber hinaus aufgrund seiner Materialeigenschaften geeignet, in das Katalysator-Netz eingelassen zu werden. Zu den Platinmetallen zählen Platin, Iridium, Osmium, Ruthenium, Rhodium oder Palladium.

Es hat sich bewährt, wenn der zweite Draht einen Draht-Durchmesser im Bereich zwischen 40 µm und 100 µm aufweist.

Im Hinblick darauf, dass der zweite Draht in das Katalysator-Netz eingelassen ist und möglichst selbst eine katalytische Aktivität aufweisen sollte, ist ein flexibler Edelmetall-Draht mit großer Oberfläche wünschenswert. Da die Flexibilität und die Oberfläche des Drahtes vom Draht-Durchmesser abhängen, sind dünne Drähte grundsätzlich wünschenswert. Es hat sich daher bewährt, wenn der zweite Draht einen Drahtdurchmesser zwischen 40 µm und 100 µm aufweist. Ein zweiter Draht mit einem Durchmesser von weniger als 40 µm kann leicht reißen und ist nur aufwendig zu verarbeiten. Draht-Durchmesser von mehr als 100 µm bewirken eine geringe Flexibilität.

In einer weiteren bevorzugten Modifikation des erfindungsgemäßen Katalysators ist vorgesehen, dass die Vorzugsrichtungen benachbarter Katalysator-Netze einen Winkel zwischen 45° und 135°, vorzugsweise einen Winkel zwischen 60° und 80°, einschließen.

Die winkelversetzte Anordnung benachbarter Katalysator-Netze beeinflusst neben der mechanischen Stabilität auch die Durchströmungseigenschaften der Katalysator-Packung. Dadurch, dass die Vorzugsrichtungen benachbarter Katalysator-Netze miteinander einen Winkel zwischen 45° und 135° einschließen, wird eine besonders hohe mechanische Stabilität der Katalysator-Packung gewährleistet.

Es hat sich gezeigt, dass eine gute Durchströmung der Katalysator-Packung bei gleichzeitig hoher mechanischer Stabilität des Katalysators insbesondere dann erzielt wird, wenn die Vorzugsrichtungen der Katalysator-Netze einen Winkel im Bereich zwischen 60° und 80° einschließen.

Bei einer derartigen Anordnung der Katalysator-Netze kreuzen sich die die Vorzugsrichtungen bestimmenden zweiten edelmetallhaltigen Drähte benachbarter Katalysator-Netze. Hierdurch wird einerseits einer Kompression der Katalysator-Packung entgegengewirkt und andererseits - beispielsweise im Gegensatz zu einer nahezu parallelen Anordnung - die Bildung von Zonen unterschiedlicher Gasdurchlässigkeit vermieden. Darüber hinaus trägt eine solche Anordnung der zweiten edelmetallhaltigen Drähte zu einer effektiven Verwirbelung eines den Katalysator durchströmenden Fluidstroms sowie zu einer Einstellung der Strömungsgeschwindigkeit für das Fluid bei, so dass hierdurch eine besonders effiziente Katalyse ermöglicht wird.In einer besonders bevorzugten Modifikation des erfindungsgemäßen Katalysators ist vorgesehen, dass die Vorzugsrichtungen benachbarter Katalysator-Netze orthogonal zueinander verlaufen.

Ein Katalysator, bei dem die Vorzugsrichtungen benachbarter Katalysator-Netze orthogonal zueinander verlaufen, ermöglicht eine besonders effektive mechanische Stabilisierung der Katalysator-Packung. Er ist darüber hinaus einfach mit geringem Materialverlust herzustellen. Dies gilt insbesondere, wenn die Katalysator-Netze eine quadratische Form aufweisen. In diesem Fall kann die Orthogonalität der Vorzugsrichtungen benachbarter Katalysator-Netze durch gegenseitige Verdrehung ohne Materialverlust an den Rändern erzielt werden.

Es hat sich als vorteilhaft erwiesen, wenn der erste edelmetallhaltige Draht aus demselben Material wie der zweite Draht gefertigt ist.

Dadurch, dass der erste und der zweite Draht aus demselben Material gefertigt sind, kann die Zusammensetzung beider Drähte an den zu katalysierenden Prozess optimal angepasst sein. In diesem Fall weisen beide Drähte optimal katalytische Aktivität auf.

Es hat sich bewährt, wenn der erste edelmetallhaltige Draht einen Draht-Durchmesser im Bereich zwischen 40 µm und 100 µm aufweist.

Im Hinblick auf eine möglichst hohe Flexibilität des aus dem ersten edelmetallhaltigen Draht gefertigten Katalysator-Netzes sowie einer bei Katalysatoranwendungen bevorzugt großen Oberfläche des Edelmetalls ist der zur Herstellung des Katalysator-Netzes eingesetzte erste edelmetallhaltige Draht möglichst dünn und hat vorteilhafterweise einen Draht-Durchmesser im Bereich von 40 µm bis 100 µm, besonders bevorzugt von 50 µm bis 80 µm.

In einer alternativen, ebenso bevorzugten Ausführungsform des erfindungsgemäßen Katalysators ist zwischen benachbarten Katalysator-Netzen ein aus einem dritten edelmetallhaltigen Draht gefertigtes zweidimensionales Zwischennetz vorgesehen.

Ein zwischen benachbarte Katalysator-Netze eingebrachtes Zwischennetz wirkt einer Kompression benachbarter Katalysator-Netze unter Druckbelastung zusätzlich entgegen. Das Zwischennetz ist ein zweidimensionales Netz, das beispielsweise durch textile Verarbeitungstechniken wie Stricken, Wirken oder Weben von edelmetallhaltigen Drähten hergestellt ist und das keine Vorzugsrichtung aufweist. Vorzugsweise zeigt auch das Zwischennetz eine katalytische Aktivität. Das Zwischennetz verfügt vorzugsweise über eine im Vergleich zu anderen Netzen eingeschränkte Flexibilität. Dadurch, dass das Zwischennetz zwischen benachbarten Katalysator-Netzen eingebracht ist, wird einer Verdichtung der Katalysator-Netze unter Druckbelastung zusätzlich entgegengewirkt. Es weist vorzugsweise eine mittlere Maschenweite im Bereich von 0,4 bis 2,0 mm auf. Ein Zwischennetz mit einer mittleren Maschenweite von weniger als 0,4 mm bewirkt einen hohen Gaswiederstand und erzeugt somit zusätzliche Kompressionskräfte. Ein Zwischennetz mit einer mittleren Maschenweite von mehr als 2 mm weist nur eine vergleichsweise geringe katalytisch wirksame Oberfläche auf.

Es hat sich als vorteilhaft erwiesen, wenn der dritte edelmetallhaltige Draht aus einem Platinmetall oder aus einer Legierung davon gefertigt ist.

Dadurch, dass der dritte Draht aus einem Platinmetall oder aus einer Legierung davon gefertigt ist, kann auch er eine katalytische Aktivität aufweisen. Der dritte edelmetallhaltige Draht ist aus einer Legierung eines Platinmetalls gefertigt; er enthält einen nennenswerten Anteil (> 50 Gew.-%) an Platinmetallen.

In einer vorteilhaften Ausgestaltung des erfindungsmäßen Katalysators weist der Zwischennetz-Draht einen Durchmesser im Bereich von 30 µm bis 100 µm auf.

Die Flexibilität des Zwischennetzes ist beispielsweise von dem Durchmesser des Zwischennetz-Drahtes abhängig. Bei einem Drahtdurchmesser von weniger als 30 µm verliert sich der Stabilisierungseffekt des Zwischennetzes. Ein Zwischennetz mit einem Drahtdurchmesser von mehr als 100 µm hat eine geringe katalytisch wirksame Oberfläche und weist nur eine geringe katalytische Aktivität pro Gewicht des eingesetzten Edelmetalls auf.

Beim Katalysator im Sinne der Erfindung ist vorgesehen, dass die Katalysator-Netze jeweils eine aus dem ersten edelmetallhaltigen Draht gefertigte Netz-Grundstruktur mit einer Netz-Richtung aufweisen, in die jeweils der zweite edelmetallhaltige Draht eingelassen ist, und dass die Netz-Richtungen benachbarter Katalysator-Netze parallel zueinander verlaufen.

Die Katalysator-Netze weisen eine netzförmige Grundstruktur auf, die beispielsweise durch Stricken, Wirken oder Weben hergestellt ist; sie legen eine Netzfläche fest. Herstellungsbedingt weisen die Netz-Grundstrukturen der Katalysator-Netze regelmäßig eine Netzrichtung auf. Beispielsweise wird die Netz-Richtung bei einem Gewebe durch die Kettfäden oder bei Maschenware durch die Verarbeitungsrichtung des Fadens festgelegt. Die Anordnung benachbarter Netz-Grundstrukturen beeinflusst die Durchströmungseigenschaften des Katalysators. Dadurch, dass die Netz-Richtungen benachbarter Netz-Grundstrukturen parallel zueinander verlaufen, bilden diese einen geringen Strömungswiderstand für ein sie durchströmendes Fluid aus. Eine Katalysator-Packung mit mehreren hintereinander angeordneten Katalysator-Netzen mit parallelen Netz-Richtungen ist darüber hinaus einfach und kostengünstig zu fertigen. Die Netz-Grundstrukturen weisen Öffnungen auf, durch die das Katalysator-Netz mit Gas durchströmt wird. Vorzugsweise sind benachbarte Netz-Grundstrukturen so angeordnet, dass die Öffnungen benachbarter Netze auf einer Senkrechten zur Netzfläche liegen. Hierdurch wird eine gute Durchströmung und ein geringer Strömungswiderstand ermöglicht. Alternativ können die Netz-Grundstrukturen so angeordnet sein, dass sie in der Ebene zueinander versetzt sind.

Erfindungsgemäß ist in die Netz-Grundstruktur ein zweiter edelmetallhaltiger Draht eingelassen, der dem Katalysator-Netz eine "Vorzugsrichtung" verleiht. Diese Vorzugsrichtung entspricht der Verlaufsrichtung des Edelmetalldrahtes; sie ist unabhängig von der Netz-Richtung, die sich durch die Grundstruktur des Netzes ergibt. Dadurch, dass benachbarte Katalysator-Netze einen Winkel einschließen, wird eine hohe mechanische Stabilität des Katalysators ermöglicht und gute Durchströmungseigenschaften gewährleistet.

Bei einer ersten vorteilhaften Ausgestaltung des erfindungsgemäßen Katalysators ist die Netz-Grundstruktur ein Gewebe mit Kettfäden und Schussfäden, bei dem die Netzrichtung durch die Kettfäden festgelegt ist.

Ein Gewebe aus einem edelmetallhaltigen Draht ist einfach und kostengünstig zu fertigen. Es wird von Kettfäden und Schussfäden gebildet. Vorzugsweise sind die Kettfäden und die Schussfäden aus dem edelmetallhaltigen Draht gefertigt. Die Kettfäden eines Gewebes verlaufen parallel zueinander und legen damit eine Netz-Richtung fest. Die Schussfäden sind durch Verkreuzung mit den Kettäden verbunden, das heißt sie verlaufen wechselweise oberhalb und unterhalb der Kettfäden.

Bei einer alternativen, ebenso bevorzugten Ausgestaltung des erfindungsmäßen Katalysators ist die Netz-Grundstruktur ein Gewirk, bei dem die Netzrichtung durch einen Längsfaden des Gewirks festgelegt ist.

Bei einer anderen, ebenso bevorzugten Ausgestaltung des erfindungsgemäßen Katalysators ist die Netz-Grundstruktur ein Gestrick, bei dem die Netzrichtung durch einen Querfaden des Gestricks festgelegt ist.

Gewirke und Gestricke werden unter dem Oberbegriff Maschenware zusammengefasst. Bei Maschenware wird die textile Flächenbildung durch maschenförmiges Verschlingen eines oder mehrerer Fadensystem erreicht. Gewirke und Gestricke sind einfach und kostengünstig zu fertigen und weisen eine hohe Elastizität auf. Sie unterscheiden sich in der Fadenzuführung bei der Herstellung. Gestricke entstehen aus einem Querfadensystem; bei Gewirken entstehen die Maschen innerhalb eines Längsfadensystems. Die Richtung der Fadenzuführung legt dabei eine Netzrichtung fest.

### Ausführungsbeispiele

Nachfolgend wird die Erfindung anhand von Ausführungsbeispielen und einer Zeichnung näher erläutert. Dabei zeigt in schematischer Darstellung
- **Figur 1**: eine erste Ausführungsform des erfindungsgemäßen Katalysators, bei der benachbarte Katalysator-Netze mit orthogonal verlaufenden Vorzugsrichtung hintereinander angeordnet sind,
- **Figur 2**: eine zweite Ausführungsform des erfindungsgemäßen Katalysators, bei der benachbarte, sich in ihren Vorzugsrichtungen unterscheidende Katalysator-Netze hintereinander angeordnet sind,
- **Figur 3**: eine Ausführungsform des erfindungsgemäßen Katalysators, bei der zwischen benachbarten Katalysator-Netzen mit verschiedenen Vorzugsrichtungen ein Zwischennetz vorgesehen ist, und
- **Figur 4**: eine weitere Ausführungsform des erfindungsgemäßen Katalysators, bei der zwischen benachbarten Katalysator-Netzen mit verschiedenen Vorzugsrichtungen ein Zwischennetz vorgesehen ist.

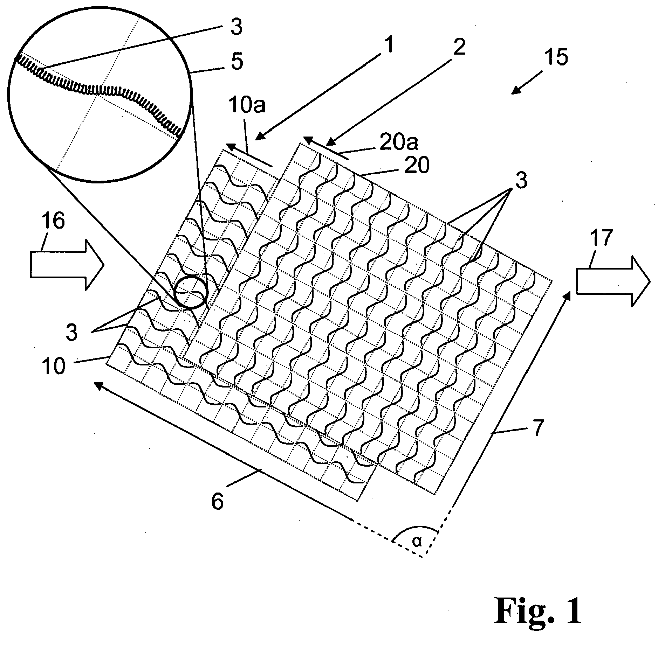

**Figur 1** zeigt schematisch eine erste Ausführungsform des erfindungsgemäßen Katalysators 15, bei der benachbarte Katalysator-Netze 1, 2 hintereinander angeordnet sind. Der Katalysator ist zur Herstellung von Blausäure nach dem Andrussow-Verfahren geeignet; er wird bei der Blausäure-Herstellung von einem vorgewärmten, gasförmigen Ammoniak-Methan-Luft-Gemisch durchströmt. Die Durchströmungsrichtung verläuft senkrecht zur Netzebene und ist durch die Pfeile 16, 17 dargestellt.

Das Katalysator-Netz 1 weist eine Grundstruktur 10 in Form eines textilen Flächengebildes mit einer Netzrichtung 10a auf, die durch maschinelles Wirken von Metalldrähten hergestellt wurde. Das Gewirk weist Maschen mit einer mittleren Maschenweite von 0,8 mm auf. Die Metalldrähte sind aus einer Platin-Rhodium-Legierung (90/10) gefertigt. Sie weisen einen Durchmesser von 76 µm und ein Gewicht von 90,8 mg/m auf.

In die zweidimensionale Grundstruktur 10 sind in einem regelmäßigen Abstand voneinander mehrere flexible Drähte 3 eingelassen, so dass ein dreidimensionales Katalysator-Netz 1 erhalten wird. Die Drähte 3 sind ebenfalls aus der Platin-Rhodium-Legierung (90/10) gefertigt; sie weisen einen Drahtdurchmesser von 76 µm und ein Gewicht von 90,8 mg/m auf. Darüber hinaus sind die Drähte 3 über ihre gesamte Länge spiralförmig gebogen, wie dies der vergrößerte Ausschnitt 5 zeigt. Der Außendurchmesser der Spirale beträgt 350 µm und die Anzahl der Windungen 3 pro mm. Über die Anzahl der Spiralwindungen je Längeneinheit ist beispielsweise die zur Verfügung stehende Draht-Oberfläche einstellbar. Durch die in die Grundstruktur 10 eingelassenen Drähte 3 wird ein besonders schweres Katalysator-Netz 1 erhalten.

Die Grundstruktur 20 des Katalysator-Netzes 2 ist genauso wie die Grundstruktur 10 des Katalysator-Netzes 1 gefertigt, so dass es.dieselben physikalischen und chemischen Eigenschaften aufweist. In die Grundstruktur 20 sind mehrere parallel zueinander verlaufende helixartig gebogene Drähte 3 eingelassen. Die chemische Zusammensetzung der Drähte 3 entspricht derjenigen der Grundstruktur 10. Die Netzrichtung 10a der Grundstruktur 10 und die Netzrichtung 20a der Grundstruktur 20 verlaufen parallel zueinander.

Dadurch, dass die in die jeweiligen Grundstrukturen 10, 20 eingelassenen Drähte 3 parallel zueinander verlaufen, weisen die Katalysator-Netze 1, 2 eine Vorzugsrichtung auf, die sich in Richtung der parallel zueinander verlaufenden Drähte 3 und in entgegengesetzter Richtung erstrecken kann. In Figur 1 sind die Vorzugsrichtungen 6, 7 durch Pfeile dargestellt. Die benachbarten Katalysator-Netze 1, 2 sind dabei derart angeordnet, dass die Vorzugsrichtungen 6, 7 orthogonal zueinander verlaufen (α = 90°).

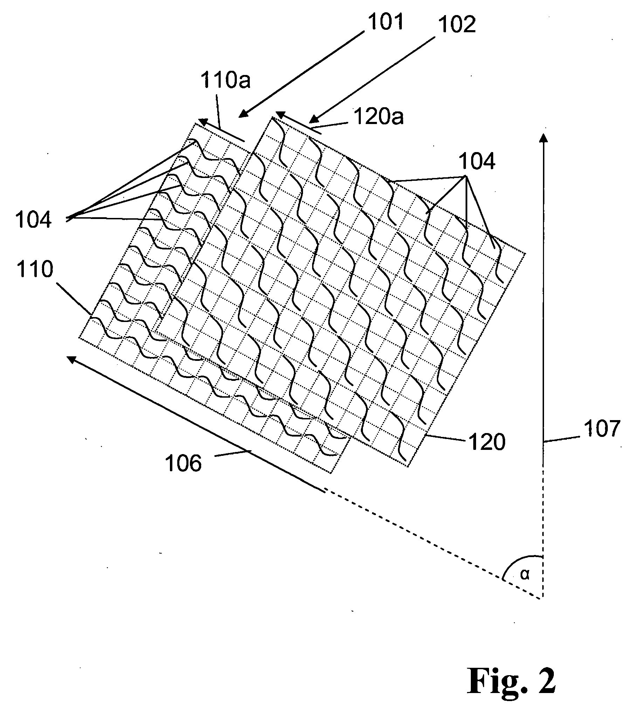

Eine zweite Ausführungsform des erfindungsgemäßen Katalysators 100 mit mehreren hintereinander angeordneten Katalysator-Netzen ist in Figur 2 dargestellt. Der Katalysator umfasst ebenfalls mehrere Katalysator-Netze. Zur Vereinfachung zeigt Figur 2 nur zwei benachbarte Katalysator-Netze 101, 102 mit parallel verlaufenden Netzrichtungen 110a, 120a. Alle benachbarten Katalysator-Netze des Katalysators sind zueinander wie in Figur 2 dargestellt angeordnet.

Den Katalysator-Netzen 101,102 liegen dieselben Grundstrukturen 110, 120 zugrunde, die durch maschinelles Stricken edelmetallhaltiger Drähte hergestellt sind. Die edelmetallhaltigen Drähte sind aus einer PdNi5-Legierung gefertigt. Die Drähte weisen einen Drahtdurchmesser von 80 µm auf. Das Gestrick umfasst Maschen mit einer mittleren Maschenweite von 0,6 mm.

In die Katalysator-Netze 101, 102 sind edelmetallhaltige Drähte 104 eingelassen, die aus einer Palladium/Nickel-Legierung (95/5) gefertigt sind. Die edelmetallhaltigen Drähte 104 weisen alternierend lineare und helixartiggebogene Längenabschnitte auf. Die Länge der linearen Längenabschnitte beträgt etwa 5 mm, die Länge der helixartig-gebogenen Längenabschnitte im gebogenen Zustand beträgt etwa 10 mm.

Die beiden Katalysator-Netze 101, 102 unterscheiden sich lediglich darin, dass die edelmetallhaltigen Drähte 104 in die Grundstrukturen 101, 102 in unterschiedlichen Richtungen eingelassen sind. Die eingelassenen Drähte 104 verleihen der jeweiligen Grundstruktur 110, 120 jeweils eine Vorzugsrichtung. Beispielhaft sind auch in Figur 2 die Vorzugsrichtungen 106, 107 durch Pfeile dargestellt.

Die benachbarten Katalysator-Netze 101, 102 sind derart hintereinander angeordnet, dass die Vorzugsrichtungen 106, 107 einen Winkel (α) von 63° einschließen.

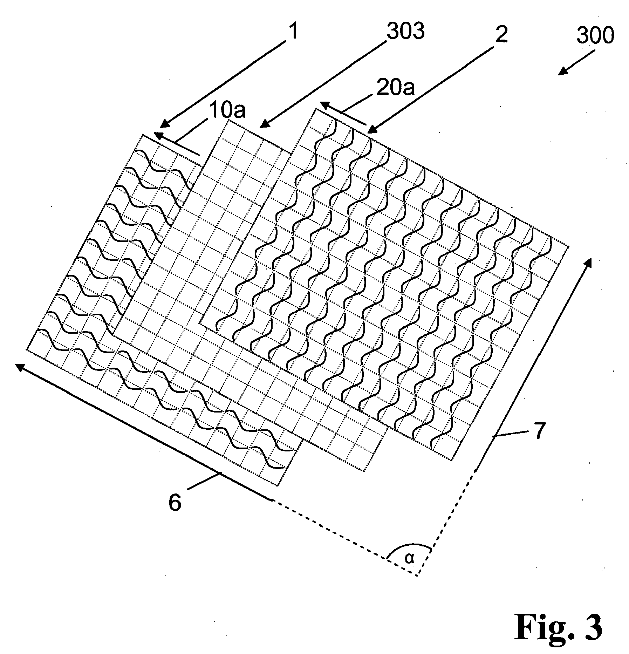

**Figur 3** zeigt eine Ausführungsform des erfindungsgemäßen Katalysators 300, bei dem zwischen benachbarten Katalysator-Netzen 1, 2 ein Zwischennetz 303 vorgesehen ist.

Die Katalysator-Netze entsprechen den Katalysator-Netzen 1, 2 aus Figur 1. Sie sind derart angeordnet, dass ihre Netzrichtungen 10a, 20a parallel zueinander verlaufen und deren Vorzugsrichtungen 6, 7 senkrecht zueinander verlaufen. Zwischen den beiden Katalysator-Netzen 1, 2 ist ein durch maschinelles Wirken eines edelmetallhaltigen Drahtes gefertigtes Zwischennetz 300 angeordnet, das eine kleinere mittlere Maschenweite als die beiden Katalysator-Netze 1, 2 aufweist. Die mittlere Maschenweite beträgt etwa 0,5 mm. Der edelmetallhaltige Zwischennetz-Draht ist aus einer PtRh5Pd5-Legierung gefertigt und weist einen Drahtdurchmesser von 50 µm auf.

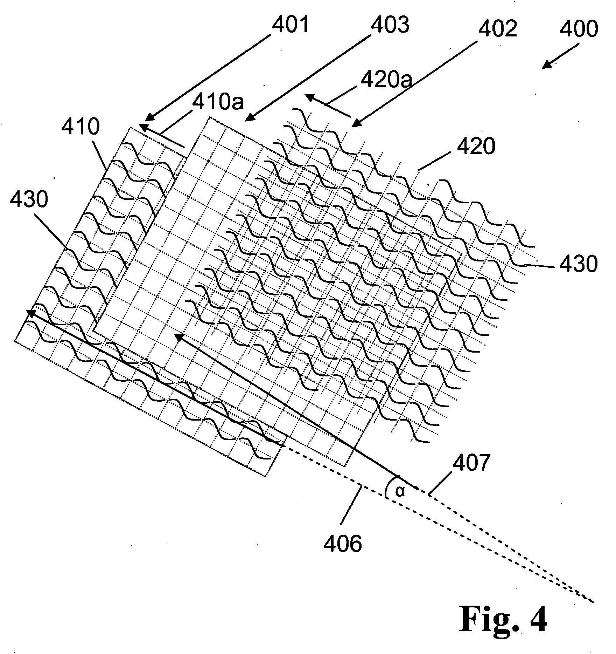

In **Figur 4** ist eine weitere Ausführungsform des erfindungsgemäßen Katalysators 400 dargestellt. Auch bei diesem Katalysator ist zwischen benachbarten Katalysator-Netzen 401, 402 ein Zwischennetz 403 vorgesehen.

Den Katalysator-Netzen 401, 402 liegt eine zweidimensionale Grundstruktur 410, 420 in Form eines textilen Flächengebildes zugrunde, die durch maschinelles Wirken von Edelmetalldrähten hergestellt wurde. Das Gewirk weist Maschen mit einer mittleren Maschenweite von 1,0 mm auf. Die Metalldrähte sind aus einer PtRh-Legierung 95/5 gefertigt. Sie haben einen Durchmesser von 61 µm und ein Gewicht von 60 mg/m. In die zweidimensionalen Grundstrukturen 410, 420 sind in einem regelmäßigen Abstand voneinander mehrere flexible Drähte 430 eingelassen, so dass dreidimensionale Katalysator-Netze 401, 402 erhalten werden. Die Drähte 430 sind aus PtRh-Legierung (90/10) gefertigt; sie weisen einen Drahtdurchmesser von 70 µm und ein Gewicht von 77 mg/m auf.

Die beiden benachbarten Katalysator-Netze 401, 402 sind derart angeordnet, dass die Netzrichtungen 410a, 410 parallel verlaufen und dieVorzugsrichtungen 406, 407 in einem Winkel von 6° zueinander verlaufen. Bei einer anderen Ausführungsform (nicht dargestellt) verlaufen die Vorzugsrichtungen in einem Winkel von 70° zueinander. Zwischen den beiden Katalysator-Netzen ist ein durch maschinelles Wirken eines edelmetallhaltigen Drahts gefertigtes Zwischennetz 403 mit einer mittleren Maschenweite von 0,8 mm angeordnet. Der edelmetallhaltige Draht des Zwischennetzes 403 ist aus einer PtRh10-Legierung gefertigt und weist einen Drahtdurchmesser von 76 µm auf.

### Kompressionsversuche

In Kompressionsversuchen wurden mehrere Stapel aus jeweils 24 Katalysator-Netzen (L x B: 50 mm x 50 mm) über einen Zeitraum von 3 Tagen bei einer Umgebungstemperatur von 1.100°C mit einem Gewicht von 1 kg (Gewichtskraft: 9,81 N) beaufschlagt.

Die Katalysator-Netze wurden aus PtRh10 -Draht mit einem Drahtdurchmesser von 76 µm gefertigt. In die Katalysator-Netze ist ein helixartig ausgebildeter zweiter Draht aus PtRh10 eingelassen. Der Drahtdurchmesser des zweiten Drahtes beträgt 76 µm. Tabelle 1 gibt die spezifischen Anordnungen der Netze und die ermittelten Kompressionsergebnisse wieder.

**Tabelle 1**

| ***Anordnung benachbarter Katalysator-Netze*** | ***Kompression*** |
|---|---|
| Vorzugsrichtungen: parallel (α = 0°) | 40% |
| Vorzugsrichtungen: diagonal versetzt (α = 45°) | 38% |
| Vorzugsrichtungen: orthogonal versetzt (α = 90°) | 36% |
| Vorzugsrichtungen: orthogonal versetzt mit Zwischennetzen (α =90°) | 35% |

Die in der Spalte "Kompression" angegebenen Werte beziehen sich auf die anfängliche Stapelhöhe.

## Patentansprüche

1. Katalysator, aufweisend mehrere hintereinander angeordnete Katalysator-Netze aus einem ersten edelmetallhaltigen Draht, in die jeweils ein zweiter edelmetallhaltiger Draht eingelassen ist, der dem jeweiligen Katalysator-Netz eine Vorzugsrichtung verleiht, **dadurch gekennzeichnet, dass** die Katalysator-Netze jeweils eine aus dem ersten edelmetallhaltigen Draht gefertigte Netz-Grundstruktur mit einer Netz-Richtung aufweisen, in die jeweils der zweite edelmetallhaltige Draht eingelassen ist, und dass die Netz-Richtungen benachbarter Katalysator-Netze parallel zueinander verlaufen, wobei der zweite Draht mindestens einen helixartig ausgebildeten Längenabschnitt aufweist und die Katalysator-Netze derart hintereinander angeordnet sind, dass die Vorzugsrichtungen benachbarter Katalysator-Netze einen Winkel zwischen 0° und 180° einschließen.

2. Katalysator nach Anspruch 1, **dadurch gekennzeichnet, dass** der zweite Draht aus einem Platinmetall oder aus einer Legierung davon gefertigt ist.

3. Katalysator nach Anspruch 1 oder 2, **dadurch gekennzeichnet, dass** der zweite Draht einen Draht-Durchmesser im Bereich zwischen 40 µm und 100 µm aufweist.

4. Katalysator nach einem der vorhergehenden Ansprüche, **dadurch gekennzeichnet, dass** die Vorzugsrichtungen benachbarter Katalysator-Netze einen Winkel zwischen 45° und 135°, vorzugsweise einen Winkel zwischen 60° und 80°, einschließen.

5. Katalysator nach einem der vorhergehenden Ansprüche, **dadurch gekennzeichnet, dass** die Vorzugsrichtungen benachbarter Katalysator-Netze orthogonal zueinander verlaufen.

6. Katalysator nach einem der vorhergehenden Ansprüche, **dadurch gekennzeichnet, dass** der erste edelmetallhaltige Draht aus demselben Material wie der zweite Draht gefertigt ist.

7. Katalysator nach einem der vorhergehenden Ansprüche, **dadurch gekennzeichnet, dass** der erste edelmetallhaltige Draht einen Draht-Durchmesser im Bereich zwischen 40 µm und 100 µm aufweist.

8. Katalysator nach einem der vorherigen Ansprüche, **dadurch gekennzeichnet, dass** zwischen benachbarten Katalysator-Netzen ein aus einem dritten edelmetallhaltigen Draht gefertigtes zweidimensionales Zwischennetz vorgesehen ist.

9. Katalysator nach Anspruch 8, **dadurch gekennzeichnet, dass** der dritte edelmetallhaltige Draht aus einem Platinmetall oder aus einer Legierung davon gefertigt ist.

10. Katalysator nach einem der vorhergehenden Ansprüche, **dadurch gekennzeichnet, dass** der Zwischennetzdraht einen Durchmesser im Bereich von 30 µm bis 100 µm aufweist.

11. Katalysator nach einem der vorhergehenden Ansprüche, **dadurch gekennzeichnet, dass** die Netz-Grundstruktur ein Gewebe mit Kettfäden und Schussfäden ist, bei dem die Netzrichtung durch die Kettfäden festgelegt ist.

12. Katalysator nach einem der Ansprüche 1 bis 10, **dadurch gekennzeichnet, dass** die Netz-Grundstruktur ein Gewirk ist, bei dem die Netzrichtung durch einen Längsfaden des Gewirks festgelegt ist.

13. Katalysator nach einem der Ansprüche 1 bis 10, **dadurch gekennzeichnet, dass** die Netz-Grundstruktur ein Gestrick ist, bei dem die Netzrichtung durch einen Querfaden des Gestricks festgelegt ist.

## Claims

1. Catalyst, comprising multiple catalyst gauzes arranged in series that are made of a first precious metal-containing wire and have a second precious metal-containing wire incorporated in them that imparts a preferential direction on the responding catalyst gauze, **characterised in that** the catalyst gauzes each comprise a basic gauze structure that is made from the first precious metal-containing wire and has a gauze direction into which the second precious metal-containing wire is incorporated in each case, and **in that** the gauze directions of neighbouring catalyst gauzes extend parallel to each other, whereby the second wire comprises at least one helical longitudinal section and the catalyst gauzes are arranged in series appropriately such that the preferential directions of neighbouring catalyst gauzes form an angle between 0° and 180°.

2. The catalyst according to claim 1, **characterised in that** the second wire is made of a platinum metal or an alloy thereof.

3. The catalyst according to claim 1 or 2, **characterised in that** the second wire has a wire diameter ranging from 40 µm to 100 µm.

4. The catalyst according to any one of the preceding claims, **characterised in that** the preferential directions of neighbouring catalyst gauzes form an angle of between 45° and 135°, preferably an angle of between 60° and 80°.

5. The catalyst according to any one of the preceding claims, **characterised in that** the preferential directions of neighbouring catalyst gauzes are extending orthogonally to each other.

6. The catalyst according to any one of the preceding claims, **characterised in that** the first noble metal-containing wire is made of the same material as the second wire.

7. The catalyst according to any one of the preceding claims, **characterised in that** the first noble metal-containing wire has a wire diameter ranging from 40 µm to 100 µm.

8. The catalyst according to any one of the preceding claims, **characterised in that** a two-dimensional intermediate gauze that is made of a third noble metal-containing wire is provided between neighbouring catalyst gauzes.

9. The catalyst according to Claim 8, **characterised in that** the third noble metal-containing wire is made of a platinum metal or an alloy thereof.

10. The catalyst according to any one of the preceding claims, **characterised in that** the intermediate gauze wire has a diameter ranging from 30 µm to 100 µm.

11. The catalyst according to any one of the preceding claims, **characterised in that** the basic gauze structure is a textile fabric comprising warp threads and weft threads, in which the gauze direction is defined by the warp threads.

12. The catalyst according to any one of the claims 1 to 10, **characterised in that** the basic gauze structure is a knitted fabric, in which the gauze direction is defined by a lengthwise thread of the knitted fabric.

13. The catalyst according to any one of the claims 1 to 10, **characterised in that** the basic gauze structure is a knitted material, in which the gauze direction is defined by a crosswise thread of the knitted material.

## Revendications

1. Catalyseur, présentant plusieurs filets de catalyseur disposés l'un derrière l'autre dans un premier fil contenant de l'acier inox, dans lesquels respectivement un deuxième fil contenant de l'acier inox est introduit qui confère au filet de catalyseur respectif un sens préféré, **caractérisé en ce que** les filets de catalyseur présentent respectivement une structure de base de filet avec un sens de filet fabriquée dans le premier fil contenant de l'acier inox, dans laquelle respectivement le deuxième fil contenant de l'acier inox est introduit, et que les sens de filets de catalyseur adjacents sont parallèles l'un à l'autre, dans lequel le deuxième fil présente au moins un tronçon longitudinal hélicoïdal et les filets de catalyseur sont ainsi disposés les uns derrière les autres que les sens préférés de filets de catalyseur adjacents incluent un angle entre 0° et 180°.

2. Catalyseur selon la revendication 1, **caractérisé en ce que** le deuxième fil est fabriqué dans un métal du groupe du platine ou dans un alliage de celui-ci.

3. Catalyseur selon la revendication 1 ou 2, **caractérisé en ce que** le deuxième fil présente un diamètre de fil entre 40 µm et 100 µm.

4. Catalyseur selon l'une des revendications précédentes, **caractérisé en ce que** les sens préférés de filets de catalyseur adjacents incluent un angle entre 45° et 135°, de préférence un angle entre 60° et 80°.

5. Catalyseur selon l'une des revendications précédentes, **caractérisé en ce que** les sens préférés de filets de catalyseur adjacents sont orthogonaux entre eux.

6. Catalyseur selon l'une des revendications précédentes, **caractérisé en ce que** le premier fil contenant de l'acier inox est fabriqué dans le même matériau que le deuxième fil.

7. Catalyseur selon l'une des revendications précédentes, **caractérisé en ce que** le premier fil contenant de l'acier inox présente un diamètre de fil entre 40 µm et 100 µm.

8. Catalyseur selon l'une des revendications précédentes, **caractérisé en ce qu'**entre des filets de catalyseur adjacents, il est prévu un filet intermédiaire bidimensionnel fabriqué dans un troisième fil contenant de l'acier inox.

9. Catalyseur selon la revendication 8, **caractérisé en ce que** le troisième fil contenant de l'acier inox est fabriqué dans un métal du groupe du platine ou dans un alliage de celui-ci.

10. Catalyseur selon l'une des revendications précédentes, **caractérisé en ce que** le fil du filet intermédiaire présente un diamètre entre 30 µm à 100 µm.

11. Catalyseur selon l'une des revendications précédentes, **caractérisé en ce que** la structure de base des filets est un tissu avec des fils de chaîne et des fils de trame, dans lequel le sens du filet est déterminé par les fils de chaîne.

12. Catalyseur selon l'une des revendications 1 à 10, **caractérisé en ce que** la structure de base des filets est un tricot dans lequel le sens du filet est déterminé par un fil longitudinal du tricot.

13. Catalyseur selon l'une des revendications 1 à 10, **caractérisé en ce que** la structure de base des filets est un tricot dans lequel le sens du filet est déterminé par un fil transversal du tricot.
